# EUROPÄISCHE PATENTANMELDUNG

(11) **EP 2 510 772 A1**
(43) Veröffentlichungstag der Anmeldung: **17.10.2012**
(21) Anmeldenummer: 12401056.2
(22) Anmeldetag: 02.04.2012
(51) Int. Cl.: A01D 34/49

(54) **Mäh- und/oder Vertikutiermaschine**

(30) Priorität: 12.04.2011 DE 102011001966
(71) Anmelder: Amazonen-Werke H. Dreyer GmbH & Co. KG, 49205 Hasbergen (DE)
(72) Erfinder: Klein, Laurent, 57910 HAMBACH (FR); Schomäker, Wilfried, 26160 Bad Zwischenahn (DE)

(57) **Zusammenfassung**

Mäh- und/oder Vertikutiermaschine mit einer Mäh- und/oder Vertikutiereinrichtung, die das abgeschnittene und/oder aus dem Boden entfernte Gut einem Sammelbehälter über eine in einem Fördertrog (3) angeordnete Querförderschnecke (4) und eine ein Förderrohr (6) und Schneckengänge (8) aufweisende Förderschnecke (5) zuführt, wobei die Querförderschnecke im Übergabebereich zur Längsförderschnecke zumindest einen sich zumindest annähernd parallel zur Drehachse der Querförderschnecke ersteckenden Übergabeflügel (11) aufweist. Um mit einfachen Mitteln eine reibungslose Übergabe des zu fördernden Gutes von der Querförderschnecke (4) zur Längsförderschnecke (5) zu ermöglichen, ist vorgesehen, dass die Umlaufbahnen der äußersten benachbarten Teile (8',11') von Übergabeflügel (11) der Querförderschnecke und Schneckenelement (8) der Längsförderschnecke sich zumindest annähernd schneiden.

## Beschreibung

Die Erfindung betrifft eine Mäh- und/oder Vertikutiermaschine gemäß des Oberbegriffes des Patentanspruches 1.

Eine derartige Mäh- und/oder Vertikutiermaschine ist durch die DE 196 07 350 B4 bekannt. Bei derartigen in der Praxis eingesetzten Maschinen ist ein größerer Abstand zwischen den Schneckenelementen der Längsförderschnecke und den Übergabeflügel der Querförderschnecke vorhanden. Hierdurch ist unter schwierigen Bedingungen keine reibungslose Übergabe des zu fördernden Gutes von der Querförderschnecke zur Längsförderschnecke möglich. Es kommt dann zu Verstopfungen.

Der Erfindung liegt die Aufgabe zu Grunde, mit einfachen Mitteln eine reibungslose Übergabe des zu fördernden Gutes von der Querförderschnecke zur Längsförderschnecke zu ermöglichen.

Diese Aufgabe wird erfindungsgemäß dadurch gelöst, dass die Umlaufbahnen der äußersten benachbarten Teile von Übergabeflügel der Querförderschnecke und Schneckenelement der Längsförderschnecke sich zumindest annähernd schneiden.

Infolge dieser Maßnahme liegen die äußersten einander benachbarten Teile von Übergabeflügel der Querförderschnecke und Schneckenelementen mit der Längsförderschnecke sehr dicht beieinander, so dass auch unter schwierigen Bedingungen eine reibungslosen Übergabe des zu fördernden Gutes erfolgt. Ferner sind die benachbarten Teile so in optimierter Weise aneinander angepasst. Durch diese Anpassung der einander benachbarten Teile zueinander, findet auch eine gegenseitige Reinigung der einander benachbarten Teile durch gegenseitiges abstreifen von anhaftenden Teilen des zu fördernden Gutes statt.

Die Anpassung der einander benachbarten Teile lässt sich in einfacher Weise dadurch verwirklichen, dass in dem äußeren Bereich der an sich gradlinig verlaufenden Außenkontur der Übergabeplatte eine zumindest annähernd an die Umlaufbahn der äußersten Teile der Schneckenelemente der Längsförderschnecke angepasste Ausnehmung angebracht ist.

Eine besonders gute Anpassung der einander benachbarten Teile lässt sich dadurch erreichen, dass die Umlaufbahnen der äußersten benachbarten Teile von dem an sich gradlinig verlaufenden äußeren Bereich des Übergabeflügels der Querförderschnecke und Schneckenelement der Längsförderschnecke sich schneiden, dass in dem äußeren Bereich der Übergabeplatten jeweils eine zumindest annähernd an die Umlaufbahn der äußersten Teile der Schneckenelemente der Längsförderschnecke angepasste Ausnehmung derart angebracht ist, dass ein Spalt von zumindest 3mm zwischen den Umlaufbahnen der äußersten benachbarten Teile von Übergabeflügel der Querförderschnecke und des Schneckenelementes der Längsförderschnecke vorhanden ist.

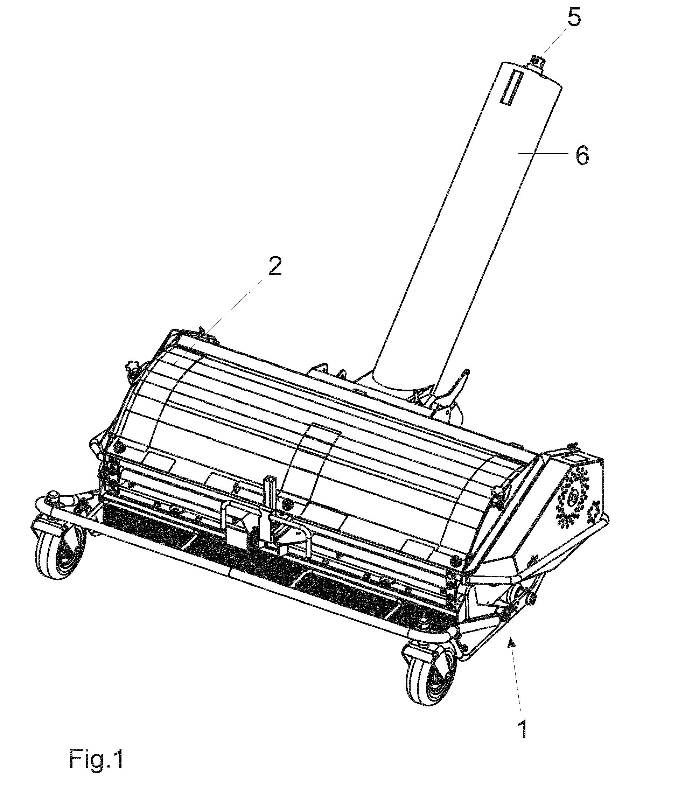

Weitere Einzelheiten der Erfindung sind der Beispielsbeschreibung und den Zeichnungen zu entnehmen. Hierbei zeigen
- Fig. 1: die Mäh- und/oder Vertikutiereinrichtung der Mäh-und/oder Vertikutiermaschine in perspektivischer Ansicht und in Prinzipdarstellung,

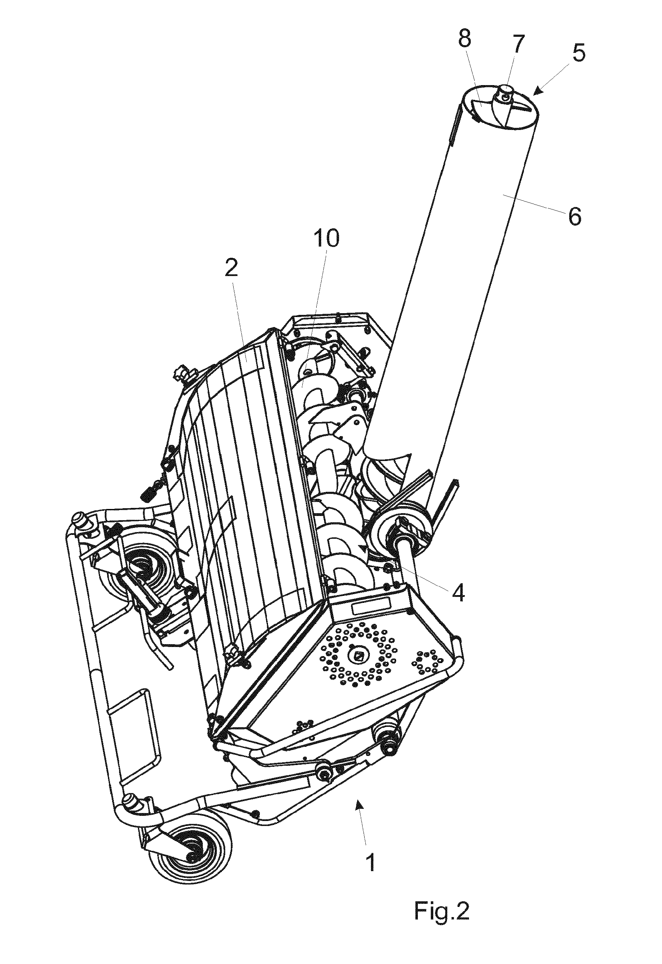

- Fig. 2: die Mäh- und/oder Vertikutiereinrichtung der Mäh-und/oder Vertikutiermaschine in einer anderen perspektivischer Ansicht und in Prinzipdarstellung,

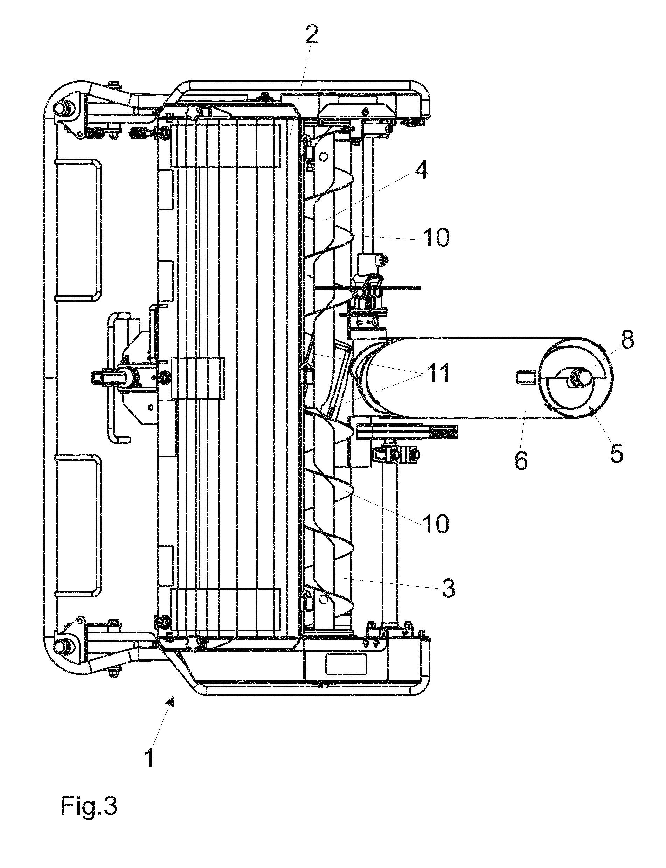

- Fig. 3: die Mäh- und/oder Vertikutiereinrichtung der Mäh-und/oder Vertikutiermaschine in der Ansicht von oben und in Prinzipdarstellung und
- Fig. 4: die Zuordnung von Querförderschnecke und Längsförderschnecke in vergrößertem Maßstab in der Ansicht gemäß Fig. 3.

Die Mäh- und/oder Vertikutiermaschine ist ein vielseitiges Gerät und lässt sich neben dem Mähen von Grünflächen auch als Vertikutier- und Aufsammelgerät einsetzen. Die Maschine weist ein nicht dargestelltes Fahrwerk mit angetriebenen Vorderrädern und hinteren Pendelrädern auf. Die Lenkung erfolgt über die angetriebenen Vorderräder. An dem Rahmen der Maschine ist auf dessen Rückseite der Sammelbehälter angeordnet. Auf der Vorderseite der Maschine ist über eine Anlenkung die als Schlegel- oder Trommelmähwerk ausgebildete Mäh- und Vertikutiereinrichtung 1 in Höhenrichtung bewegbar angeordnet. An das Gehäuse 2 der Mäh- und Vertikutiereinrichtung 1 schließt sich ein Fördertrog 3 mit der Querförderschnecke 4 an. Die Querförderschnecke 4 fördert das Gut von beiden Seiten der Längsförderschnecke 5 zu. Diese Längsförderschnecke 5 ist schräg nach hinten oben weisend angeordnet und endet in einem Sammelbehälter. Die Förderschnecke 5 weist das Förderrohr 6 und die auf der als Schneckenwellenrohr ausgebildeten Schneckenwelle 7 angeordneten Schneckengänge 8 auf. Die Förderschnecke 5 ist zweigängig ausgebildet. Die Schneckengänge 8 weisen eine Vielzahl von Schneckenwindungen auf. Die Schneckengänge 8 der Förderschnecke 5 fördern das Gut verdichtend in den Sammelbehälter, wobei die Enden der Schneckengänge 8 das Gut in den Vorratsbehälter pressen und es dort verdichten.

An dem unteren Ende des Schneckenwellrohres 7 ist die Antriebswelle angeordnet.

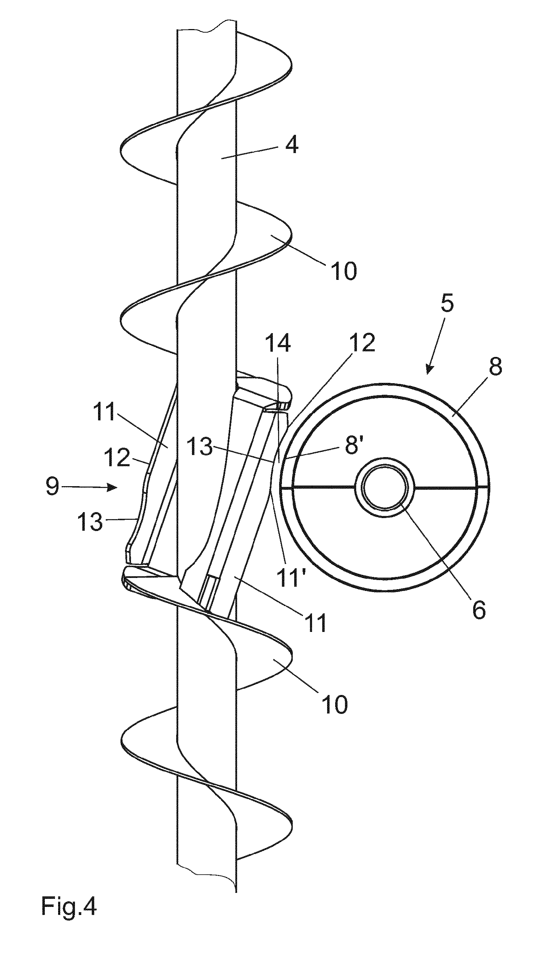

Die in dem Fördertrog 3 angeordnete Querförderschnecke 5 fördert das von den Mäh- und/oder Vertikutiermessern der Mäh-und/oder Vertikutiereinrichtung 1 gemähte und/oder vertikutierte Gut, welches in den Fördertrog 3 der Querförderschnecke 4 geworfen wird, von beiden Seiten der Längsförderschnecke 5 zu. Die Querförderschnecke 5 weist auf jeder Seite zur Mitte 9 fördernde Schneckenelemente 10 auf. Zwischen den zur Mitte 9 fördernden Schneckenelementen 10 sind in der Mitte der Querförderschnecke 5 zwischen den aufeinander zu fördernden Schneckenelementen 10 die Übergabeflügel 11 angeordnet. Die Übergabeflügel 11 erstrecken sich zumindest annähernd parallel zur Drehachse der Querförderschnecke 5. Die Umlaufbahnen der äußersten benachbarten Teile 8' und 11' der Übergabeflügel 11 der Querförderschnecke 4 und der Schneckenelemente 8 der Längsförderschnecke 5 schneiden sich zumindest annähernd, wie Fig. 4 zeigt.

Damit ein reibungsloser Betrieb von Quer- 4 und Längsförderschnecke 5 bei dieser dichten Anordnung der Übergabeflügel 11 zu den Schneckenelementen 8 der Längsförderschnecke 5 erfolgten kann, ist in dem äußeren Bereich 12 der sich gradlinig verlaufenden Außenkontur der Übergabeplatte der Übergabeflügel 11 jeweils eine zumindest annähernd an die Umlaufbahn der äußersten Teile 8' der Schneckenelemente 8 der Längsförderschnecke 5 angepasste Ausnehmung 13 angebracht, wie die Fig. 4 zeigt.

Hierbei schneiden sich die Umlaufbahnen der äußersten benachbarten Teile von dem sich an sich gradlinig verlaufenden äußeren Bereich des jeweiligen Übergabeflügels 11 der Querförderschnecke 4 und den Schneckenelementen 8 der Längsförderschnecke 5. Hierbei ist in dem äußeren Bereich 12 der Übergabeplatten der Übergabeflügel 11 jeweils eine zumindest annähernd an die Umlaufbahn der äußersten Teile 8' der Schneckenelemente 8 der Längsförderschnecke 5 angepasste Ausnehmung 13 derart angebracht, dass ein Spalt 14 von mindestens 3 mm zwischen den Umlaufbahn der äußersten benachbarten Teile 8' und 11' von Übergabeflügel 11 der Querförderschnecke 4 und der Schneckenelemente 8 der Längsförderschnecke 5 vorhanden ist. Durch diese dichte Anordnung können die zueinander benachbarten Teile 8' und 11' jeweils an diese anhaftende Gutteile abstreifen. Darüber hinaus erfolgt eine gute Übergabe des Gutes von der Querförderschnecke 4 durch die Übergabeflügel 11 an die Schneckenelemente 8 der Längsförderschnecke 5.

## Patentansprüche

1. Mäh- und/oder Vertikutiermaschine mit einer Mäh- und/oder Vertikutiereinrichtung, die das abgeschnittene und/oder aus dem Boden entfernte Gut einem Sammelbehälter über eine in einem Fördertrog angeordnete Querförderschnecke und eine ein Förderrohr und Schneckengänge aufweisende Förderschnecke zuführt, wobei die Querförderschnecke im Übergabebereich zur Längsförderschnecke zumindest einen sich zumindest annähernd parallel zur Drehachse der Querförderschnecke ersteckenden Übergabeflügel aufweist, **dadurch gekennzeichnet, dass** die Umlaufbahnen der äußersten benachbarten Teile (8', 11') von Übergabeflügel (11) der Querförderschnecke (4) und Schneckenelement (8) der Längsförderschnecke (11) sich zumindest annähernd schneiden.

2. Mäh- und/oder Vertikutiermaschine nach Anspruch 1, **dadurch gekennzeichnet, dass** in dem äußeren Bereich (12) der an sich gradlinig verlaufenden Außenkontur der Übergabeplatte (11) eine zumindest annähernd an die Umlaufbahn der äußersten Teile (8') der Schneckenelemente (8) der Längsförderschnecke (5) angepasste Ausnehmung (13) angebracht ist.

3. Mäh- und/oder Vertikutiermaschine nach Anspruch 1, **dadurch gekennzeichnet, dass** die Umlaufbahnen der äußersten benachbarten Teile (8', 11') von dem an sich gradlinig verlaufenden äußeren Bereich des Übergabeflügels (11) der Querförderschnecke (4) und Schneckenelement (8) der Längsförderschnecke (5) sich schneiden, dass in dem äußeren Bereich der Übergabeplatten (11) jeweils eine zumindest annähernd an die Umlaufbahn der äußersten Teile (8') der Schneckenelemente (8) der Längsförderschnecke (5) angepasste Ausnehmung (13) derart angebracht ist, dass ein Spalt (14) von zumindest 3mm zwischen den Umlaufbahnen der äußersten benachbarten Teile (8', 11') von Übergabeflügel (11) der Querförderschnecke (4) und des Schneckenelementes (8) der Längsförderschnecke (5) vorhanden ist.
